# EUROPEAN PATENT APPLICATION

(11) **EP 0 711 900 A1**
(43) Date of publication of application: **15.05.1996**
(21) Application number: 95500097.1
(22) Date of filing: 03.07.1995
(51) Int. Cl.: E06B 9/00, E06B 9/88

(54) **Arresting gear for an elevation cardan**

(30) Priority: 08.11.1994 ES 9402841
(71) Applicant: FORJAS DEL VINALOPO, S.L., E-03630 Sax (Alicante) (ES)
(72) Inventor: Chico, Francisco Guillen, E-03630 Sax (Alicante) (ES)
(74) Representative: Perez Bonal, Bernardo

(57) **Abstract**

It is applicable to cardan employed in the manipulation of blinds, and consists in an interlocking sheet billet (1) circuitously embraced by a spring (6) that is extended in the form of a connecting cath over the upper pinions (2,2') of the cardan and below in a cannelure of the leading screw corresponding to the perpetual screw vinculated to the pinions, presenting in the hub of one of the pinions each opening (4) over those that are interlocking to sheet billet in the clashing situation of the same, after a determined number of turns of the pinions coincident with the number of cogs of the pinion that is composed of a pinion more than the other.

## Description

### OBJECT OF THE INVENTION

The present invention endeavours to obtain an arresting gear applicable to a cardan type used in the manipulation of blinds, in such a way as to optimize its effectiveness and resistance to chafing, by carrying out the interlocking directly over the slue leading screw that transmits the movement and is common to the working of the driving crank.

### BACKGROUND OF THE INVENTION

In the cardan types utilized for the elevation of blinds different solutions are employed to obtain the inmobility of the blind when it has reached its highest position.

In these type of devices a perpetual screw propelled by the slue crank brake is used, engaged to which is a crown with its corresponding pinion coupled to the slue axle of the blind.

The utilisation of methods of recessing are known to be applicable to the gearing of the sluing mechanism as is the case with the other utility model corresponding to the same title, in that it is arranged of sheet billets bonded to the lateral surface of two of the cogs of each one of the component cogwheels of the gearing, in such a way that after a determined number of turns of the mechanism the recessing is made between both sheet billets with obstructs backward movement.

In this case, the user makes an effort until encountering resistance to the turning of the crank in the coupling of the gearing sheet billets. If the crank continues turning in this coupling position, the cogwheels tend to separate provoking a chafing on the box that supports them and therefore tending to load the casting in which it is found, provoking a progesesive deterioration that increases as the applied force becomes greater.

The need to obtain an arresting gear of greater fiability and less chafing that acts directly over the leading screw transmitter of the invention viable.

### DESCRIPTION OF THE INVENTION

The arresting gear of the elevation cardan that is presented consists in an interlocking sheet billet that establishes a connection between the perpetual screw and the upper pinions in the crown of the device in the arresting position. In such a way this checks the perpetual screw, as well as the pinions, of the holes in which the sheet billet in this position is connected.

The recessing sheet billet is tensioned through the action of a spring, in such a way that it is permanently in contact with the surface perimeter of the hub of the pinions during the slue. It is introduced into the opening of the pinions to check them when they clash. This situation occurs after a determined number of turns, a number that coincides with the highest number of cogs of the two pinions that are engaged in the crown.

One of the pinions has one more cog than the other because a confrontation between the cannelures might be possible after a number of predetermined turns.

One of the extremes of the interlocking sheet billets is connected onto the cannelure of the pinions and the other in the cannelure which is in the leading screw.

To achieve the uncoupling of the whole, the driving crank is turned in the opposite direction affecting the lateral surface of the cannelure of the leading screw on the lower flange of the interlocking sheet billet, elevating it, tensioning the spring and uncoupling the sheet billet from the cannelures of the pinions.

### DESCRIPTION OF THE DRAWINGS

To complement the description that is being made and with the object of helping towards a better understanding of the features of the invention, the present descriptive paper is accompanied by, as an integral part, a set of plans where, with an illustrative and not a limited character, the following have been represented:

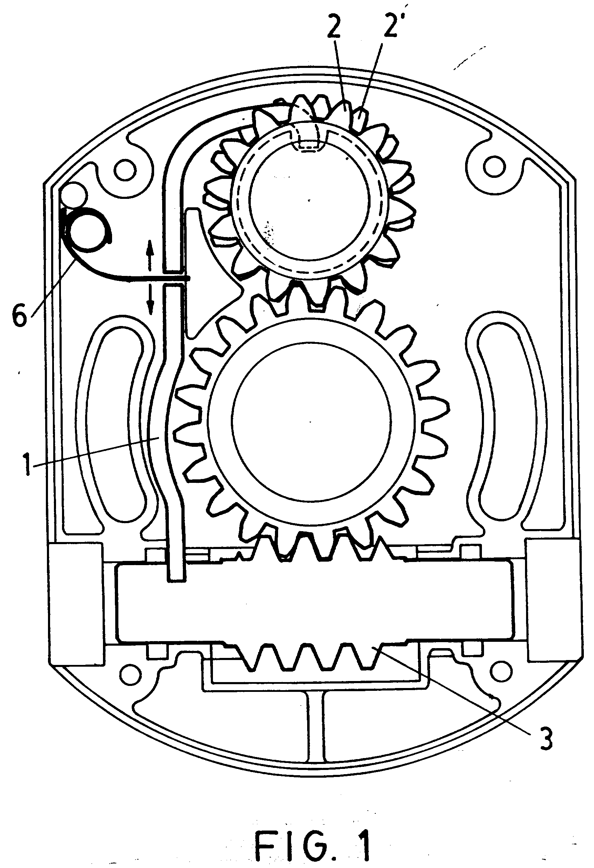

Figure 1.- shows a view of the elevation cardan with the interlocking sheet billet in the coupling position.
Figure 2.- shows a lateral view of the interlocking sheet billet in the coupling position.

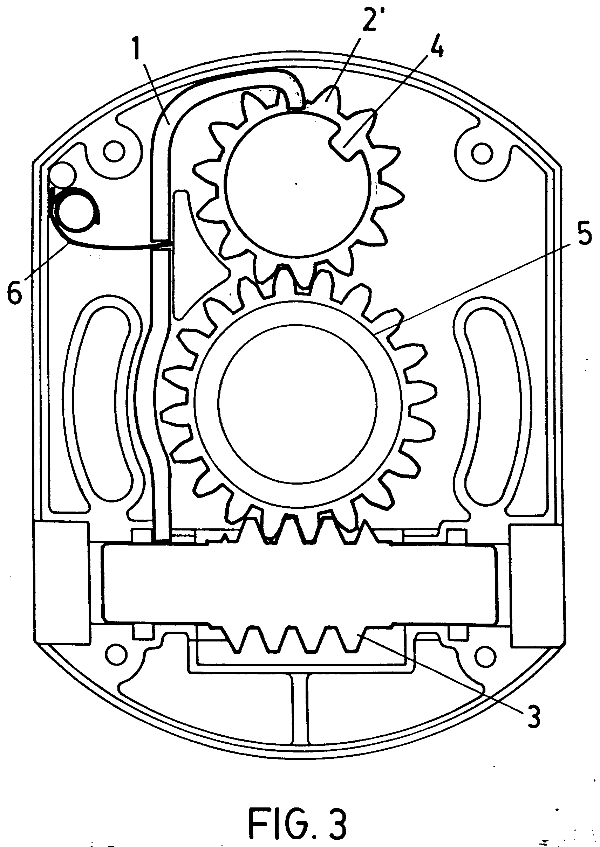

Figure 3.- shows a view of the elevation cardan with the interlocking sheet billet in the position of uncoupling, only one of the pinions appearing.

### PREFERRED EMBODIMENT OF THE INVENTION

It is established from the figures that he arresting gear for the elavation cardan consists of an interlocking sheet billet (1) of bent circuitous form, that is greatly extended in the form of a coupling catch on the higher pinions (2,2'), and below is interlocked in a cannelure in the driving leading screw (3) in the coupling position, making the interlocking of some openings (4) in the drum of the pinions (2,2'), clash on puting into action a number of turns on the crack needed to reach the top of the blind.

To this objective some better arranged pinions were designed (2,2'), both clashing and connecting over the crown (5) that turns by perpetual screw action (3). One of the pinions has one more cog than the other, this way making sure the coincidence of the cannelures (4) after a number of turns that are equal to the number of cogs of the pinion with the greatest number of cogs.

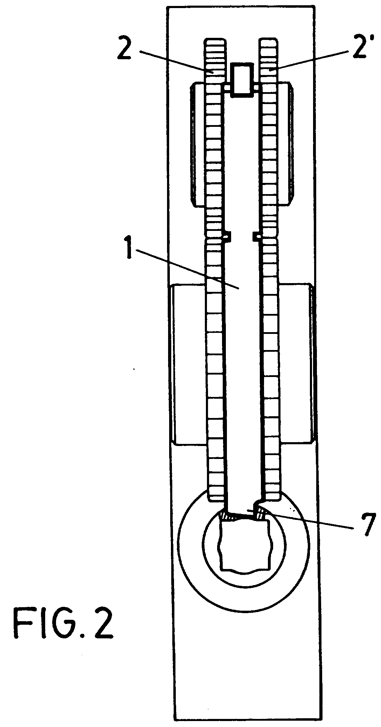

During the movement of the pinions (2,2') the interlocking sheet billet (1) is tensioned by mens of a spring (6) that embraces the sheet billet transversally, and this in a higher contact with the perimeter of the drums of the sheet billets as can be seen from Figure 2, only coupling when the cannelures (4) of the pinions (2,2') coincide.

On uncoupling the sheet billet (1), the crank is turned in the opposite direction, affecting the lateral surface of the rectangular spring of the leading screw (3) on the lower flange (7) of the sheet billet (1) elevating and unfastening it from the cannelure of the leading screw and from the openings of the pinions (2,2').

It is not considered necessary to extend this description for any expert in the material can understand the advantages derived from the invention.

The materials, forms, size and disposition of the elements will be susceptible to variation always when the essential features of the invention are not altered.

The terms in which this paper have been described should always be taken in a broad and never a limited sense.

## Claims

1. Arresting gear for an elevated cardan applicable to a cardan that has a leading screw constituted by a perpetual screw, integral with the driving crank, connected to which is found a crown with the corresponding pinion or pinions to those that are connected the slue axle of the blind, essentially characterized in that it is comprised of a recessing sheet billet (1) of circuituous form that is extended upwardly in the form of a connecting catch on the upper pinions (2,2') and below is connected to a rectangular groove in the leading screw (3), presenting in the hub of the pinions (2,2') the cannelure (4) that interlocks the sheet billet (1) in the clashing situation of the same, disposing of one more cog in one of the pinions than in the other determined the clashing between the cannelures (4) after a number of turns of the driving crank coincident with the number of cogs of the pinion which has the greatest number of cogs.

2. Arresting gear for elevation cardan in accordance with the previous claim, characterized in that the interlocking sheet billet (1) is embraced by a spring (6) that stays tensioned in the position of the uncoupled sheet billet (1), being in this situation the sheet billet in higher contact with the perimeter edge of the hubs of the pinions and unconnected from the cannelure of the leading screw (3).

3. Arresting gear for elevation cardan in accordance with the previous claims, charactarized in that the cannelure of the leading screw presents an approximately rectangular form that permits the interlocking of the lower flange (7) of the sheet billet.
